# EUROPEAN PATENT APPLICATION

(11) **EP 2 191 714 A1**
(43) Date of publication of application: **02.06.2010**
(21) Application number: 09075496.1
(22) Date of filing: 09.11.2009
(51) Int. Cl.: A01K 5/02, B66C 7/10, B66C 7/00

(54) **Feed displacement device and an assembly therewith**

(30) Priority: 26.11.2008 NL 1036244
(71) Applicant: Lely Patent N.V., 3147 PA Maassluis (NL)
(72) Inventor: Sie, Howard, 3037 VC Rotterdam (NL); Vlaar, Iwan Yves, 4735 AC Zegge (NL); Van den Berg, Karel, 2971 VB Bleskensgraaf (NL)
(74) Representative: Corten, Maurice Jean F.M.

(57) **Abstract**

The invention provides a feed displacement device for picking up, displacing and dispensing material (5), in particular livestock feed, comprising a rail system and a trolley (2) with a gripping device, which trolley is movable over the rail system, and is configured to pick up and dispense the material, wherein the rail system comprises a fixed rail part (II) and a displaceable rail part (I) which is connectable to the latter, wherein the trolley (2) is movable directly over the fixed and displaceable rail parts, and in such a manner that the trolley can cover a surface area for picking up the material (5) from various positions. The trolley (2) is easily positionable over an area (4) where material, such as feed, is to be picked up. As a result thereof, no robot arm or the like has to swing out sideways and thus no unnecessarily large forces act thereon. In addition, the device overall is compact since the trolley is in effect displaceable in two directions by combining the displaceability along the displaceable rail part and the displaceability of the displaceable rail part itself.

## Description

The present invention relates to a feed displacement device, in particular according to the preamble of Claim 1.

The prior art comprises, inter alia, NL 1030090, which document discloses a grab bucket which is displaceable along a rail for grabbing and displacing feed. This system has the drawback that it is not always compact and sufficiently flexible to be used in all circumstances. Document EP 1 161 861 discloses a device for automatically detaching and displacing an amount of feed, comprising a robot arm with gripper which is displaceable along a rail. One drawback of this device is that, due to the fact that the robot arm swings sideways, it often has to be of an unnecessarily heavy design in order to be able to process a sufficiently large amount of feed. Document DE 28 39 615 discloses a feed device with a crane which is guided along a rail and can swing sideways, the grab bucket of which can be disconnected and can be transferred to a carrier or trolley which is guided along another, lower rail. This construction is unnecessarily complicated and, in addition, has the same drawback with regard to the heavy design of the crane jib which swings sideways.

It is an object of the invention to reduce at least some of the abovementioned drawbacks and to this end the invention provides a feed displacement device having the characterizing features of Claim 1.

As the rail system of the feed displacement device comprises a fixed rail part and a displaceable rail part which is connectable to the fixed rail part, the trolley can easily be positioned over an area where material, such as feed, is to be picked up. As a result thereof, no robot arm or the like has to swing out sideways and thus no unnecessarily large forces act thereon. In addition, the device overall is compact since the trolley is in effect displaceable in two directions by combining the displaceability along the displaceable rail part, and the displaceability of the displaceable rail part itself. Thus, the trolley can be positioned in different positions in two independent directions, i.e. move over a surface area, which is the meaning of covering a surface area. Due to this compact design, a large speed gain is possible since the trolley has to travel a smaller distance and can thus arrive more quickly at the destination with the loaded material. Another advantage is the fact that the trolley itself comprises the gripping device and thus no separate robot arm or crane jib with gripper is required to load the trolley. This results in a device which is simpler overall and thus less prone to failures.

It is expressly pointed out here that the term 'rail part' is in this case understood to mean a rail over which the trolley moves directly, that is to say in direct contact therewith. A movable rail part is therefore a rail over which the trolley moves, which rail part is itself also designed to be displaceable, whereas the fixed rail part comprises a rail over which the trolley moves but which is itself arranged so as to be immovable. In this case, it is important that the trolley of the fixed rail part can pass to the displaceable rail part and vice versa. As a result thereof, it is very simple to extend, for example, the fixed rail part, which is also covered by the trolley, for example if a stable or the like is extended. By way of explanation: a travelling crab can be regarded as a trolley on a displaceable rail. This displaceable rail itself runs along two fixed rails, but the latter two are not fixed rail parts according to the invention, since the trolley cannot travel over them directly, and cannot pass to them either. It should be noted that the displaceable rail part does not necessarily have to be displaced over a rail system which is itself fixed again, but can also be displaced, for example, by means of controllable telescopic cylinders or the like.

Particular embodiments are described both below and in the dependent claims. In the present invention, material is mentioned which in this case is understood to mean in particular, but not exclusively, feed. In general, the material will be bulk material, such as said feed or litter or the like, but it may also be other materials, such as medicines. Yet another material is, for example, manure in a stable which can be picked up and moved to a store for manure.

In particular, the feed displacement device comprises a flexible and/or telescopic and/or articulated connecting rail part between, and preferably fixedly connected to, the fixed rail part and the displaceable rail part. In this embodiment, it is ensured that the trolley can easily pass over from the fixed rail part to the displaceable rail part. In this case, the displaceable rail part does not have to be in a fixed location, but may for example already be positioned above a position of the trolley to be attained, or a position between the fixed rail part and this position to be attained, as a result of which time can be saved when moving the trolley to the position to be attained. The flexible or telescopic part can compensate for differences in distance or length between the fixed rail part and the displaceable rail part by changing the course thereof and thus of the radius/radii of curvature and/or its length. The connection at the junction with the fixed rail part and with the displaceable rail part is preferably flexible in order to produce a smooth transition.

In embodiments, the displaceable rail part forms part of an overhead crane or gantry crane. As they are simple and strong, these are suitable embodiments for covering a surface area. In particular if the gantry crane is displaceable autonomously in its entirety, that is to say can travel over the ground by itself, it is very simple to allow the device to cover a surface area of any size, so that, for example, the number of types of material which can be distributed can be adjusted in a very simple manner. However, other systems with a displaceable rail part are not excluded.

In particular, the displaceable rail part is displaceable in a direction at right angles to the fixed rail part and/or along a circle of which the fixed rail part forms a radius or axis. Upon displaceability in such directions, it is easy to gain a good overview of the positions to be attained, either as a grid pattern or a pattern of sectors ("pie wedges").

In embodiments, the feed displacement system comprises a plurality of trolleys, and the rail system comprises a switch system which is configured to be able to displace the trolleys independently of one another between the fixed rail part and the displaceable rail part. These embodiments have the advantage that, while one trolley loads material at a position above the surface, another trolley travels for example over the fixed rail part to deliver the material. Upon their return, the trolleys then change position with the aid of the switch system. This makes it possible to achieve a time saving.

In particular, the rail system comprises a plurality of displaceable rail parts or a rotatable switch rail part. In the first case, a first trolley which has delivered material at a position on the fixed rail part may pass onto a first displaceable rail part, while a second trolley, which has loaded material at a position on a second displaceable rail part can (then) already pass onto the fixed rail part. It should be noted that it is also possible to have a plurality of fixed rail parts, wherein with the aid of the switch system, in particular a displaceable rail part, a trolley can be displaced from a fixed rail part to another fixed rail part.

The trolley or the trolleys are advantageously autonomously displaceable. This is understood to mean that the trolley(s) has/ve their own drive means. This ensures great freedom when displacing the trolleys, without power cables or the like interfering at the transition from one to the other rail part etc. In this case, it should be noted that an autonomously displaceable trolley can also be controlled from the outside, with the trolley obviously being configured to receive and process an external control signal. In addition, it is also possible to provide a passively displaceable trolley, which is displaceable, for example, by means of a cable or toothed wheel drive.

In embodiments, the feed displacement device comprises a control device which is configured to control the at least one trolley and the displaceable rail system. By means of such a control device, the advantages of the invention (in particular compact design and speed) can be used to an optimum degree, since this makes it possible to carry out the effective control which has already been described above. In this case, in particular with the embodiment having a flexible or telescopic connecting rail part, the displaceable rail part is already moved to the desired position as much as possible, so that the trolley then only has to be displaced in one direction. Also, the switch part can be controlled in a similar manner, which can also result in a time saving, in particular with a plurality of trolleys. Obviously, the control device is furthermore configured for a trolley to pick up material at the correct desired location, and displace it to a different, desired position and dispense it there. Such a control device may be provided on a trolley, centrally or elsewhere, provided that the required communication means are provided for transmitting the required control signals.

The invention furthermore provides an assembly of a feed displacement device according to the invention, a feed storage section, comprising a plurality of sections or containers for the storage of material, in particular livestock feed, so as to be removable by the at least one trolley from the displaceable rail part, and a feeding section, comprising a plurality of feeding troughs which can be filled from the fixed rail part by the at least one trolley. Such an assembly provides an effective, quick and compact device for, for example, dispensing a plurality of types of feed. In this case, it is possible to displace a suitable amount of feed of a desired composition and proportion to any location along the fixed rail part.

In particular, at least one feeding trough forms part of an additional displaceable feed device. This means that the additional feed device itself is also displaceable. As a result thereof, for example, a trolley can fill such an additional feed device and then return in order to collect another portion of feed. The additional feed device can then in turn dispense the received amount of feed to, for example, individual feeding troughs or the like, in desired amounts.

The additional displaceable feed device advantageously comprises a trolley which is autonomously moveable over the ground. This in turn offers the advantage that the feeding troughs or other dispensing areas do not necessarily have to be situated under the fixed rail part, so that the overall area which is to be covered by the assembly for dispensing the material also becomes a two-dimensional surface, and thus much more flexible.

In the present invention, the trolley is configured for picking up, displacing and dispensing material, in particular feed. To this end, the trolley is advantageously designed as described in NL 1030090, in particular the figures and the description thereof on pages 7-12, the contents of which are deemed to be incorporated in this application. Obviously, this is not the only possible embodiment. Thus, a blow and suction device may also be used in the trolley, and the latter may also be displaceable in the vertical direction with a hoist chain or the like, rather than with a linkage mechanism. In this context, it should be pointed out that picking up material and adjusting the height of the trolley or parts thereof preferably takes place in a vertical direction without lateral deflections in order to generate as few forces as possible.

The invention will be described below by means of a few nonlimiting exemplary embodiments with reference to the drawing, in which:
- Figure 1 diagrammatically shows a top view of a system according to the invention,
- Figure 2 shows a side view of the system from Figure 1, and
- Figure 3 diagrammatically shows an alternative embodiment in perspective view.

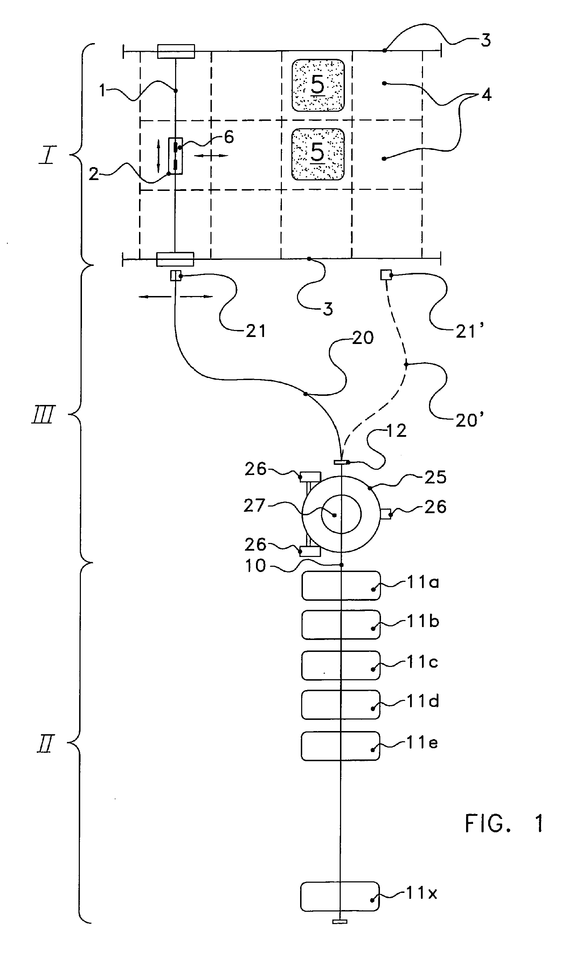

In Figure 1, reference numeral I denotes a displaceable rail part and reference numeral II a fixed rail part, connected by means of a connecting rail part III.

The displaceable rail part I, which in terms of function corresponds to a kind of feed kitchen, comprises a first supporting rail 1, which is displaceably arranged on second supporting rails 3, and on which a movable trolley 2 is disposed. The net result is that the trolley 2 is displaceable in both directions of the arrow and can thus be placed above various compartments 4 containing different types of feed 5. The trolley 2 can in this case comprise a vertically displaceable gripper or the like in order to pick up feed 5 or other material from one or more compartments 4. Such details which are not essential to the invention are assumed to be known to those skilled in the art. What may be important is the possibility of the gripper or the like being able to fill the trolley 2 with a plurality of types of feed 5, so that the trolley 2 can dispense a mixture.

It should be noted that the number of compartments 4 can simply be increased by extending the second supporting rails 3.

After the trolley 2 has been filled, the latter can be displaced in the direction of the optional connecting rail part III. The latter comprises a flexible rail 20 and a connecting piece 21. The relevant parts are designed such that the trolley 2 can pass onto the connecting rail part III via the connecting piece, in particular the flexible rail 20 thereof. As the latter is of a flexible design, it can from any random position be connected to the main rail 10 of the fixed rail part II via a connecting piece 12. The trolley 2 can then run to a point above one of the feeding troughs 11 a-11 x, or for example an autonomous feed vehicle 25, provided with wheels 26 and a filling hopper 27. The trolley may be autonomously displaceable, at least have its own motor or other displacement means and can in this case be controlled by an external or internal control device. It can also be driven externally by a chain, external drive rolls or wheels, etcetera.

The flexible rail 20 may be composed of intrinsically flexible material or comprise one or more joints or hinges so that the distance between the connecting pieces 21 and 12, which may be variable, can always be bridged. A second flexible rail 20' is also illustrated, albeit with a dashed line, and can be connected to the first supporting rail 1 by means of a second connecting piece 21', and to the main rail 10 by means of the connecting piece 12. The relevant parts then operate as a switch, so that a second trolley (not illustrated) can drive onto the displaceable rail part I, while the first trolley 2 which has meanwhile been filled can, for example, run to the feeding troughs 11. Thus, the capacity of the system can be increased. Alternative switch systems could also be used, such as a plurality of first supporting rails 1 onto which in each case a trolley 2 can be passed.

The main rail 10 of the fixed rail part II is in this case straight, but can obviously follow any desired track, even with one or more branches. It will also be clear that the main rail 10 can easily be extended, for example if the number of feeding troughs 11 increases. The figure also shows that, for example, an autonomous feed vehicle 25 can be filled using the trolley 2. To this end, the main rail is provided with a free section under which the feed vehicle 25 can position itself. This feed vehicle 25 may, for example, be used for individual feeding of calves or the like. It may, for example, have a lower priority with regard to filling than the troughs 11. The relevant parts can be controlled by means of a control system which is not illustrated in more detail.

It should be noted that the feeding troughs 11 may in each case also be storage containers for feed or other material and that another system (not shown) is provided in addition to the system according to the invention which composes a mixture from the feeding troughs which is fed to the animals in troughs. In this case, the trolley 2 can thus also collect one single type of feed 5 from the compartments 4. For example, an additional local feed system may be provided, wherein an additional trolley composes feed from the troughs 11 and displaces it further to the feeding troughs or the like.

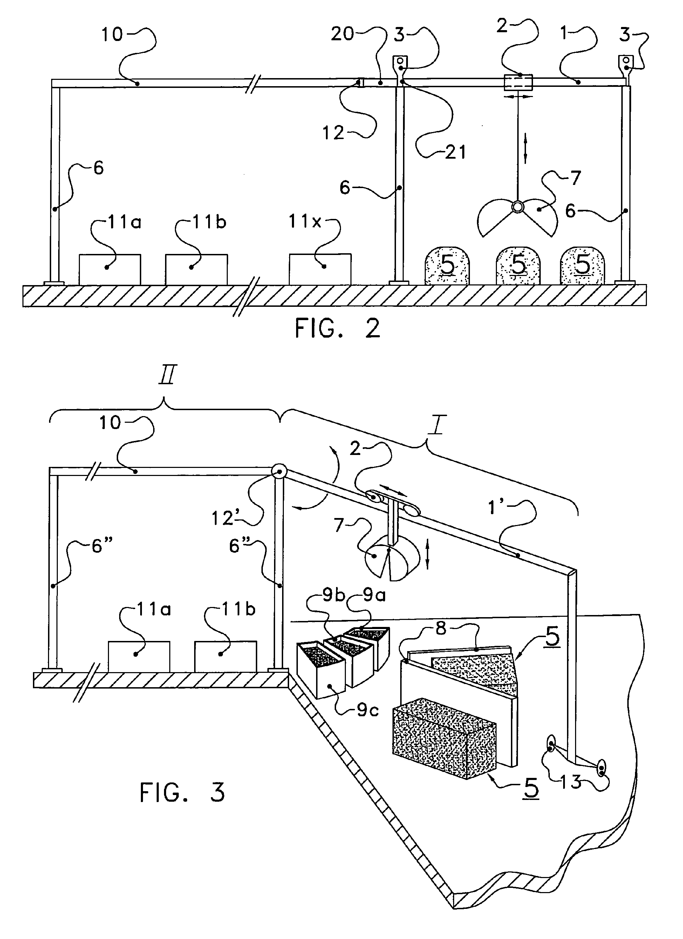

Figure 2 diagrammatically shows a side view of the system according to Figure 1, with the autonomous feed vehicle having been omitted. In the entire drawing, similar or identical parts have been denoted by the same reference numerals. In addition, a limited number of supports 6 are illustrated, as well as a gripper 7 of the trolley 2.

It can clearly be seen that the gripper 7 actually has three degrees of freedom, two of which are indicated by arrows.

Figure 3 shows another embodiment of the system according to the invention, in a diagrammatic perspective view.

The system according to Figure 3 does not have the optional connecting rail part from Figures 1 and 2, while the fixed rail part II is of substantially identical design. By contrast, the displaceable rail part I is designed here in the form of a kind of overhead crane which can carry out a rotary movement about support 6" with connecting piece 12', which may be designed as a hinge. To this end, the first supporting rail 1' is supported at the other end by a support 6' on a movable wheel set 13, so that it can carry out a rotary movement, indicated by the double arrows. In this case, the trolley 2' can be placed above optional additional storage containers 9a - 9c or above different types of feed 5, which has been poured between optional partitions 8. Only two types of feed are illustrated, but obviously a plurality of, for example concentric, rows of types of feed may be provided. The same applies to the additional storage containers, which may be provided, for example, for intermediate storage or for other purposes. An advantage of the rotatable arrangement of this embodiment is the fact that the connection between the fixed rail part II and the displaceable rail part I can be produced in a reliable manner and always in the same spot as well.

All of the illustrated exemplary embodiments show a substantially horizontal course of the rails. Of course, it is possible to produce a difference in height in the rail system, with, for example, the displaceable rail part I being situated in a higher position, with higher heaps of feed, than the fixed rail part II with feeding troughs. Also, the illustrated displaceable rail part I in Figures 1 and 2 may be designed as a rail part having a support at each end instead of being displaceable over two fixed rails 3, the supports themselves being displaceable over the floor, for example by means of wheels.

The exemplary embodiments illustrated here only serve to illustrate the invention and not to limit it. Those skilled in the art will readily be able to think of embodiments which are within the scope of the invention. The scope of protection is defined in the attached claims.

## Claims

1. A feed displacement device for picking up, displacing and dispensing material, in particular livestock feed, comprising a rail system and at least one trolley with a gripping device, which trolley is movable over the rail system, and is configured to pick up and dispense the material,
**characterized in that** the rail system comprises a fixed rail part and a displaceable rail part which is connectable to the fixed rail part, wherein the trolley is movable directly over the fixed rail part and directly over the displaceable rail part, and in such a manner that the trolley can cover a surface area for picking up the material from various positions on that surface area.

2. The feed displacement device according to Claim 1, comprising a flexible and/or telescopic and/or articulated connecting rail part between, and preferably fixedly connected to, the fixed rail part and the displaceable rail part.

3. The feed displacement device according to one of the preceding claims, wherein the displaceable rail part forms part of an overhead crane or gantry crane.

4. The feed displacement device according to one of the preceding claims, wherein the displaceable rail part is displaceable in a direction at right angles to the fixed rail part and/or along a circle of which the fixed rail part forms a radius or axis.

5. The feed displacement device according to one of the preceding claims, comprising a plurality of trolleys, and wherein the rail system comprises a switch system which is configured to be able to displace the trolleys independently of one another between the fixed rail part and the displaceable rail part.

6. The feed displacement device according to Claim 5, wherein the rail system comprises a plurality of displaceable rail parts or a rotatable switch rail part.

7. The feed displacement device according to one of the preceding claims, wherein the trolley or the trolleys are autonomously displaceable.

8. The feed displacement device according to one of the preceding claims, furthermore comprising a control device which is configured to control the at least one trolley and the displaceable rail system.

9. Assembly of a feed displacement device according to one of the preceding claims, a feed storage section, comprising a plurality of sections or containers for the storage of material, in particular livestock feed, so as to be removable by the at least one trolley from the displaceable rail part, and a feeding section, comprising a plurality of feeding troughs which can be filled from the fixed rail part by the at least one trolley.

10. Assembly according to Claim 9, wherein at least one feeding trough forms part of an additional displaceable feed device.

11. Assembly according to Claim 10, wherein the additional displaceable feed device comprises a trolley which is autonomously movable over the ground.
